Europäisches Patentamt

European Patent Office

Office européen des brevets

(11) Veröffentlichungsnummer: **0 254 088 B1**

# EUROPÄISCHE PATENTSCHRIFT

(45) Veröffentlichungstag der Patentschrift: **27.11.91**

(51) Int. Cl.⁵: **A47B 63/06**, **F16P 3/14**

(21) Anmeldenummer: **87109441.3**

(22) Anmeldetag: **01.07.87**

(54) **Schutzvorrichtung für mechanische Schränke.**

(30) Priorität: **18.07.86 DE 3624265**

(43) Veröffentlichungstag der Anmeldung:
**27.01.88 Patentblatt 88/04**

(45) Bekanntmachung des Hinweises auf die
Patenterteilung:
**27.11.91 Patentblatt 91/48**

(84) Benannte Vertragsstaaten:
**AT BE CH DE FR GB IT LI NL SE**

(56) Entgegenhaltungen:
**CH-A- 547 712          DE-B- 2 430 536
DE-U- 7 228 228      FR-A- 1 092 681
FR-A- 2 210 271       US-A- 2 729 531
US-A- 3 897 123**

(73) Patentinhaber: **MEGAMAT GmbH & Co.
Krumbacher Strasse 4
W-8909 Neuburg/Kammel(DE)**

(72) Erfinder: **Katzenschwanz, Norbert, Dr.-Ing.
Krumbacher Strasse 4
W-8909 Neuburg/Ka.(DE)**

(74) Vertreter: **Kahler, Kurt, Dipl.-Ing.
Patentanwälte Kahler & Käck Gerberstrasse
3 Postfach 1249
W-8948 Mindelheim(DE)**

EP 0 254 088 B1

**Beschreibung**

Die Erfindung betrifft eine Schutzvorrichtung für mechanische Schränke, insbesondere Paternosterschränke, gemäß den oberbegrifflichen Merkmalen des Patentanspruches 1.

Eine derartige Schutzvorrichtung mit einer Lichtschranke zur Überwachung der Entnahmeöffnung ist aus der CH-A-547 712 bekannt. Hierbei ist an jedem Schubfach oder Karteibehälter an dem der Entnahmeöffnung zugewandten Ende ein Bauteil, z. B. ein Blechstreifen oder ein Handgriff befestigt, der nur bei voll eingeschobenem Schubfach außerhalb des Strahlenganges der Lichtschranke liegt. Da ein Paternosterschrank oft Hunderte von Schubfächern aufweist, ist die zusätzliche Anbringung von Blechstreifen oder von sogenannten abstehenden Fahnen sehr bauaufwendig.

Dies gilt auch für die alternative Verwendung von einem von der Lichtschranke unabhängigen Schutzsystem, mit dem die ordnungsgemäße Position einzelner oder mehrerer Schubfächer innerhalb ihrer Umlaufbahn z. B. durch elektrische Kontakte überprüft wurde und somit erst beim sicheren Einrasten der Schubfächer die Stromzufuhr zum Umlaufantrieb freigegeben wurde. Dies bedingt jedoch bei Paternosterschränken für relativ kleines Lagergut wie z. B. Medikamente und damit vielen Schubfächern entsprechend viele Schutzkontakte mit zugehöriger Verkabelung, so daß hier mehrere hundert Schutzkontakte nötig sind. Dies erfordert einen beträchtlichen Bauaufwand und hohe Produktionskosten. Außerdem sind bei Änderung in der Schubfachaufteilung aufgrund anderer Warenabmessungen die Kontakte zur Überprüfung der Einrastung ebenfalls mit zu ändern, was ohne Fachpersonal kaum möglich ist.

Die Aufgabe der Erfindung besteht demzufolge darin, die gattungsgemäße Schutzvorrichtung dahingehend zu verbessern, daß auf einfache Weise und mit geringem Bauaufwand die ordnungsgemäße Einschubposition einer Vielzahl von Schubfächern, auch bei variabler Fachaufteilung, mitüberprüft werden kann.

Diese Aufgabe wird gelöst mit einer Schutzvorrichtung gemäß den Merkmalen des Patentanspruches 1.

Durch die erfindungsgemäße Anordnung einer Abdeckung erfüllt die bereits vorgesehene Lichtschranke eine weitere Funktion und spart somit viele Bauteile ein, insbesondere wenn für Kleinteile pro Gutträger eine Vielzahl von Schubfächern vorgesehen sind. Die Überprüfung der ordnungsgemäßen Einraststellung wird vorteilhaft für mehrere Schubfächer gleichzeitig von nur einer Abdeckung übernommen und über die Lichtschranke wird das Freigabe- bzw. Sperrsignal an den Umlaufantrieb freigegeben.

Weiterhin ist von Vorteil, daß bei Änderungen der Fachaufteilung die Prüfvorrichtungen für die ordnungsgemäße Position nicht mehr abgeändert oder gar erweitert werden brauchen. Außerdem kann die Abänderung von jeder Bedienperson leicht durchgeführt werden, da Umbauarbeiten an der Prüfvorrichtung auch bei unterschiedlichen Schubfachhöhen entfallen.

In vorteilhafter Weise lassen sich selbst bei sehr flachen Schubladen oder Fachböden, wie sie z.B. zum Einstecken von Werkzeugen verwendet werden, einfache und im allgemeinen lediglich zwei Lichtschranken mit nur wenigen Strahlengängen zur Absicherung der Entnahmeöffnung verwenden, während für diesen Anwendungsfall mit weit auseinander liegenden Fachböden bisher eine Vielzahl von Lichtschranken und Reflektoren zur Erzeugung eines sog. Lichtvorhanges nötig war.

Besondere Ausführungsarte der Erfindung werden in den Unteransprüchen 2-8 dargestellt.

Anhand von drei Ausführungsbeispielen wird die erfindungsgemäßen Schutzvorrichtung erläutert und beschrieben.

Es zeigen:

Fig. 1    eine perspektivische Darstellung eines mechanischen Schrankes mit seiner Entnahmeöffnung;

Fig. 2    eine Vorderansicht der Entnahmeöffnung;

Fig. 3    eine Draufsicht gemäß Fig. 2.

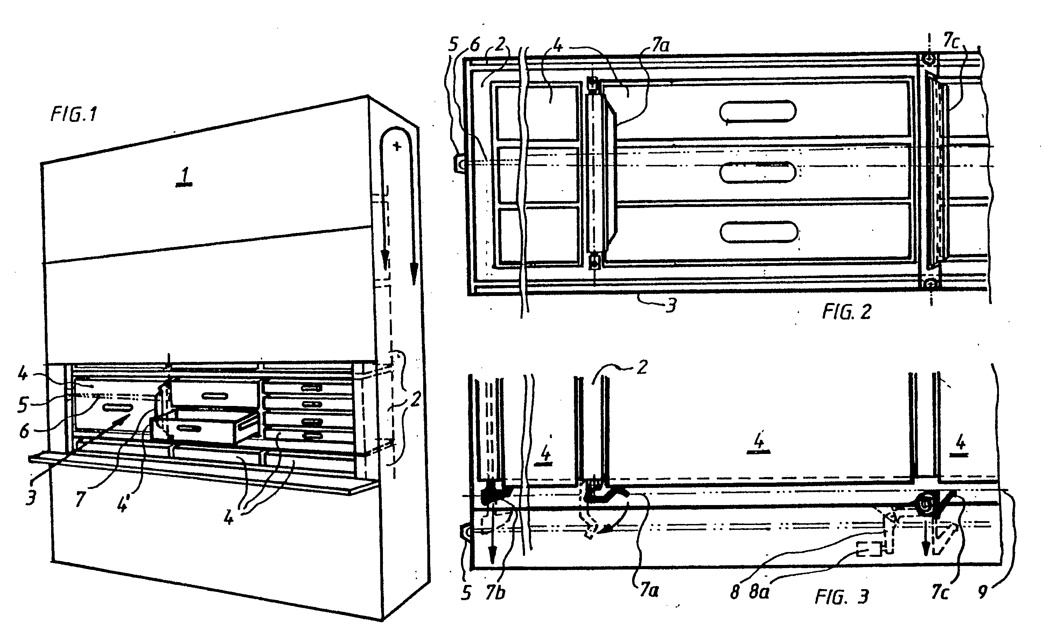

In Fig. 1 ist ein mechanischer Schrank 1 dargestellt, der als Umlaufregal oder Paternosterschrank ausgebildet ist. Die Umlaufbewegung der Gutträger 2 ist durch einen Pfeil an der Stirnseite des Umlaufregals angedeutet. Die Gutträger 2 sind hier kastenförmig ausgeführt und tragen schubladenförmige Schubfächer 4, die an der Entnahmeöffnung 3 an Führungen ein- und ausschiebbar sind, wie dies an dem Schubfach 4' angedeutet ist. Fig. 1 zeigt unterschiedliche Schubfachaufteilungen mit einem, zwei oder auch vier Schubfächern 4 in dem vertikal nochmals untergliederten Gutträger 2. Ebenso kann der Gutträger 2 auch fachbodenartig ausgebildet sein und als Schubfach 4 flache Platten tragen, in die z.B. Werkzeuge wie Bohrer usw. eingesteckt werden können.

In der Entnahmeöffnung 3 des mechanischen Schranken 1 ist an deren Innenseite eine Lichtschranke 5 angedeutet, deren Strahlengang 6 sich über die gesamte Breite der Entnahmeöffnung 3 erstreckt und auf der gegenüberliegenden Seite empfangen wird, außer eine lichtundurchlässige Fläche, wie in Fig. 1 dargestellt, ragt in den Strahlengang 6. In diesem Fall ist es die Abdeckung 7, die durch das ausgeschobene Schubfach 4' in der dargestellten Ausführungsform in den Strahlengang 6 geschwenkt wurde und somit diesen und den Antrieb des Umlaufregals unterbricht.

Fig. 2 zeigt die Entnahmeöffnung 3 in einem vergrößerten Ausschnitt und Fig. 3 die dazugehörige Draufsicht auf das mittlere Schubfach 4 des hier drei Schubfächer aufweisenden Gutträgers 2, der in etwa die gesamte Entnahmeöffnung 3 beansprucht. Lediglich oben und unten an der Entnahmeöffnung 3 sind die jeweils folgenden Gutträger 2 zu erkennen. An dem zentralen Gutträger 2 ist als eine Form der erfindungsgemäßen Abdeckung 7 die Schwenkklappe 7a befestigt, hier jedoch im Gegensatz zu Fig. 1 in der geschossenen Stellung, wie dies in Fig. 3 geschwärzt dargestellt ist. Die Schwenkklappe 7a kann dabei auch als Zuhaltung für die Schubfächer 4 dienen und zwar jeweils für einen senkrecht übereinander angeordneten Schubfachstapel pro Gutträger. Da die Schwenkklappe 7a am Gutträger 2 befestigt ist, läuft sie mit diesem beim Betrieb des Paternosterschrankes etwa entlang der Umlaufbahn 9 mit um. Beim Ausschieben eines Schubfaches 4 schwenkt die Schwenkklappe 7a in den Strahlengang 6 der Lichtschranke 5 und blockiert somit den Umlaufbetrieb.

Eine zweite Ausführungsform ist in Fig. 2 und 3 jeweils rechts dargestellt. Hierbei ist die Abdeckung 7 in Form einer aufrollbaren Plane 7c am Schrank 1, also stationär, angeordnet, da hierdurch die Anzahl der Abdeckungen 7 stark reduziert werden kann. Auch die Schwenkklappe 7a eignet sich für die stationäre, nicht umlaufende Anbringung. Die lichtundurchlässige Plane 7c wird ähnlich einer Filmleinwand oder einem Rollbandmaß durch das Ausschieben des Schubfaches 4 am geschwärzt dargestellten Formstück mit ausgezogen und gelangt in den Strahlengang 6 der Lichtschranke 5. Bei nicht sehr exakter Führung der Gutträger 2 kann es zur Vermeidung des Kontaktes von Abdeckung 7 und Gutträger 2 notwendig sein, die stationären Abdeckungen mittels Stellmittel 8 wie z.B. der hier dargestellte Winkelhebel im Zusammenwirken mit z.B. Elektromagneten 8a etwas von der Umlaufbahn 9 wegzuentfernen. Die Stellmittel 8 können dabei über Gestänge miteinander verbunden sein, so daß z.B. ein Elektromotor zum Abheben der Abdeckungen ausreicht. Weiterhin kann diese Zwangsbewegung der Abdeckungen 7 auch in entgegengesetzter Bewegungsrichtung zum Schließen und Verriegeln der Schubfächer 4 verwendet werden.

Eine weitere Ausführungsform der Abdeckung 7 ist in Fig. 3 durch die Schiebeklappe 7b dargestellt. Diese ist in sich starr und wird ähnlich einer Schublade mit dem Schubfach 4 aufgeschoben. Sie gelangt dabei jedenfalls in den Strahlengang 6, da sie zumindest auf der Höhe der Lichtschranke angeordnet ist, während Schubfächer 4 auch unter- oder oberhalb des Strahlenganges einer einfachen Lichtschranke herausgezogen werden können. Die Schiebeklappe 7b ist mitumlaufend zwischen den jeweiligen Schubfachstapeln eines Gutträgers 2 in Schiebeführungen gelagert und kann z.B. unter Verwendung von Druckfedern auch als Zuhaltung und Schließvorrichtung der Schubfächer 4, dienen. Vorteilhaft kann dabei je eine Schiebeklappe 7b für die beiden benachbarten Schubfachstapel dienen.

Für die Zuhaltung der Schubfächer 4 mittels der Abdeckung 7 können verschiedene Federarten verwendet werden, z.B. für die Schwenkklappe 7a Torsionsfedern oder Spiralfedern. Insbesondere eignet sich auch die Anlenkung der Abdeckung 7 über federbelastete Hebel, da sich hiermit eine progressive oder knickende Betätigungskraftkennlinie für das Aus- bzw. Einschieben der Schubfächer 4 erzielen läßt. Neben den angeführten Ausführungsbeispielen der erfindungsgemäßen Abdeckung, auf die mehrere Schubfächer gemeinsam wirken können und somit eine einfache und wirkungsvolle Abschaltung des Antriebs über die Störung einer Lichtschranke bei geöffnetem Schubfach bewirkt, sind auch noch weitere Ausführungsformen und andere Kombinationen der beschriebenen Ausführungen möglich.

## Patentansprüche

1. Schutzvorrichtung für mechanische Schränke, insbesondere Paternosterschränke, mit zu einer Entnahmeöffnung (3) bewegbaren Gutträgern (2) mit jeweils mehreren ein- und ausschiebbaren Schubfächern (4) und mit wenigstens einer die Entnahmeöffnung (3) absichernden Lichtschranke (5), die bei Unterbrechung ihres Strahlenganges (6) den Umlaufantrieb des Schrankes (1) stillsetzt, wobei wenigstens eine Abdeckung (7) vorgesehen ist, die zusammen mit einzelnen Schubfächern (4) bei deren Ein- und Ausschubbewegung verschieb- oder verschwenkbar ausgebildet ist und die bei zumindest teilweise ausgeschobenem Schubfach (4') in den Strahlengang (6) der Lichtschranke (5) ragt, dadurch gekennzeichnet, daß jeweils für mehrere Schubfächer (4) gemeinsam lediglich eine Abdeckung (7) vorgesehen ist, die etwa die Höhe der Entnahmeöffnung (3) einnimmt.

2. Schutzvorrichtung nach Anspruch 1, dadurch gekennzeichnet, daß die Abdeckung (7) federbelastet ausgebildet ist.

3. Schutzvorrichtung nach Anspruch 2, dadurch gekennzeichnet, daß die Abdeckung (7) als Schließvorrichtung für die Schubfächer (4) ausgebildet ist.

4. Schutzvorrichtung nach Anspruch 1, dadurch gekennzeichnet, daß die Abdeckung (7) durch eine Schwenkklappe (7a) gebildet ist.

5. Schutzvorrichtung nach Anspruch 1, dadurch gekennzeichnet, daß die Abdeckung (7) durch eine in sich starre Schiebeklappe (7b) gebildet ist.

6. Schutzvorrichtung nach Anspruch 1, dadurch gekennzeichnet, daß die Abdeckung (7) durch eine flexible, aufrollbare Plane (7c) gebildet ist.

7. Schutzvorrichtung nach Anspruch 1, dadurch gekennzeichnet, daß jeweils eine Abdeckung (7) zusammen mit einzelnen Schubfächern (4) zweier benachbarter Schubfachstapel verschieb- oder verschwenkbar ausgebildet ist.

8. Schutzvorrichtung nach Anspruch 7 und Anspruch 4, dadurch gekennzeichnet, daß zwei Schwenkklappen (7a) scharnierbandartig ineinandergreifend und mit gemeinsamer Achse ausgebildet sind.

**Claims**

1. Security device for mechanical cabinets in particular conveyer type cabinets including article carriers (2) movable to a removing aperture (3) and having several closable and openable drawers (4), and at least a light barrier (5) securing the removing aperture (3) for halting upon interruption of its beam path (6) the circulating drive of the cabinet (1) at least one cover (7) being provided designed for being shifted or pivoted together with individual drawers (4) during their closing and opening movements and projecting into the beam path (6) of the light barrier (5) when a drawer (4') is at least partially opened characterized in that only one cover (7) is commonly provided for several drawers (4) each occupying about the height of the removing aperture (3).

2. Security device of claim 1 characterized in that the cover (7) is formed spring loaded.

3. Security device of claim 2 characterized in that the cover (7) is formed as a locking device for the drawers (4).

4. Security device of claim 1 characterized in that the cover (7) is formed by a pivotal flap (7a).

5. Security device of claim 1 characterized in that cover (7) comprises a shifting flap (7b) rigid as such.

6. Security device of claim 1 characterized in that the cover (7) comprises a flexible awning (7c) adapted to be rolled-up.

7. Security device of claim 1 characterized in that one cover (7) each is formed shiftable or pivotable together with individual drawers (4) of two adjacent drawer stacks.

8. Security device of claim 7 and claim 4 characterized in that two pivotal flaps (7a) are formed engaging each other like a hinge frame having a common axle.

**Revendications**

1. Dispositif de protection pour armoires mécaniques, notamment pour armoires pater-noster, comprenant des porte-marchandises (2) mobiles par rapport à une ouverture (3) d'accès et dotés chacun de plusieurs tiroirs (4) pouvant être tirés et repoussés, et comprenant au moins un barrage photo-électrique (5) destiné à protéger l'ouverture (3) d'accès, ce barrage photo-électrique arrêtant la marche circulatoire de l'armoire (1) lorsque le trajet (6) de ses rayons est interrompu, une pièce (7) de recouvrement au moins étant prévue, cette pièce étant réalisée de façon à glisser ou à pivoter en même temps que l'un des tiroirs (4) effectue un mouvement d'ouverture ou de fermeture, et qui fait saillie sur le trajet (6) des rayons du barrage photo-électrique (5) lorsqu'un tiroir (4') est au moins partiellement tiré, caractérisé en ce qu'une seule pièce (7) commune de recouvrement est prévue pour plusieurs tiroirs (4) respectivement, qui couvre à peu près la hauteur de l'ouverture (3) d'accès.

2. Dispositif de protection selon la revendication 1, caractérisé en ce que la pièce (7) de recouvrement est soumise à l'action d'un ressort.

3. Dispositif de protection selon la revendication 2, caractérisé en ce que la pièce (7) de recouvrement constitue un dispositif de verrouillage des tiroirs (4).

4. Dispositif de protection selon la revendication 1, caractérisé en ce que la pièce (7) de recouvrement est réalisée sous forme d'un volet pivotant (7a).

5. Dispositif de protection selon la revendication 1, caractérisé en ce que la pièce (7) de recouvrement est réalisée sous forme d'un panneau coulissant rigide (7b).

6. Dispositif de protection selon la revendication 1, caractérisé en ce que la pièce (7) de recouvrement est réalisée sous forme d'un rideau flexible (7c) à enrouleur.

7. Dispositif de protection selon la revendication 1, caractérisé en ce que chaque pièce (7) de recouvrement est réalisée de façon à glisser ou à pivoter en même temps que l'un quelconque des tiroirs (4) de deux piles contiguës de tiroirs.

8. Dispositif de protection selon les revendications 7 et 4, caractérisé en ce que deux volets pivotants (7a) sont réalisés sous forme de charnières interpénétrantes et comportant un axe commun.

FIG.1

FIG. 2

FIG. 3